# EUROPEAN PATENT APPLICATION

(11) **EP 3 418 031 A1**
(43) Date of publication of application: **26.12.2018**
(21) Application number: 18178611.2
(22) Date of filing: 19.06.2018
(51) Int. Cl.: B29C 55/28, B29C 47/00

(54) **FOUR-BUBBLE EXTRUSION PROCESS FOR A BLOWN POLYMER FILM BIAXIALLY ORIENTATED**

(30) Priority: 20.06.2017 US 201762522409 P
(71) Applicant: Macro Engineering & Technology Inc., Mississauga, Ontario L4Z 2E5 (CA)
(72) Inventor: Planeta, Miroslav, Mississauga, Ontario L5J 1A6 (CA); Tamber, Harinder, Brampton, Ontario L6Y 0P1 (CA)
(74) Representative: Patentanwälte Bauer Vorberg Kayser

(57) **Abstract**

A multi-layer tubular film is co-extruded and cooled to form a first bubble, then collapsed, preheated and blown into a second bubble. The second bubble is further heated from outside to produce a decreasing temperature gradient from the outside surface of the film to the inside surface of the film. The outside surface of the film is hotter than the inside surface of the film and the inside surface of the f film is hot enough for re-blowing but sufficiently cool to avoid blocking. The film is then collapsed, blown into a third bubble and cooled to produce biaxially-oriented film, which is then collapsed, blown into a fourth bubble, heated and then cooled film to relieve stress and impart desired shrink properties to the film to produce ship-stable biaxially-oriented film.

## Description

### CROSS-REFERENCE TO RELATED APPLICATION

This application claims priority to United States Provisional Application No. 62/522,409 filed on June 20, 2017, the teachings of which are hereby incorporated by reference.

### TECHNICAL FIELD

The present disclosure relates to co-extrusion of multi-layer thin polymer films using blown film processes.

### BACKGROUND

Although so-called "double bubble" and "triple bubble" blown film processes are well known techniques for use in co-extruding multi-layer thin polymer films, these methods suffer from certain limitations.

### SUMMARY

A multi-layer tubular film is co-extruded and cooled to form a first bubble, then collapsed, preheated and blown into a second bubble. The second bubble is further heated from outside to produce a decreasing temperature gradient from the outside surface of the film to the inside surface of the film. The outside surface of the film is hotter than the inside surface of the film and the inside surface of the film is hot enough for re-blowing but sufficiently cool to avoid blocking. The film is then collapsed, blown into a third bubble and cooled to produce biaxially-oriented film, which is then collapsed, blown into a fourth bubble, heated and then cooled film to relieve stress and impart desired shrink properties to the film to produce ship-stable biaxially-oriented film.

In one aspect, a method for producing a biaxially-oriented blown film comprises co-extruding a tubular film having at least three layers, cooling the tubular film to produce tubular cooled film, collapsing the tubular cooled film to produce collapsed cooled film, preheating the collapsed cooled film to produce collapsed preheated film, blowing the collapsed preheated film to produce tubular preheated film, further heating the tubular preheated film from outside of the tubular preheated film to produce further heated tubular film having a decreasing temperature gradient from an outside surface of the further heated tubular film to an inside surface of the further heated tubular film whereby the outside surface of the further heated tubular film is hotter than the inside surface of the further heated tubular film and the inside surface of the further heated tubular film is hot enough for re-blowing but sufficiently cool to avoid blocking, then collapsing, blowing and cooling the further heated tubular film to biaxially orient the further heated tubular film and produce biaxially-oriented tubular film, and collapsing, blowing, heating and then cooling the biaxially-oriented tubular film to relieve stress within the biaxially-oriented tubular film to produce ship-stable biaxially-oriented tubular film.

In some embodiments, preheating the cooled film to produce the preheated film may comprise heating the collapsed cooled film to produce the collapsed preheated film. Heating the collapsed cooled film may comprise passing the collapsed cooled film through a liquid bath that is warmer than the collapsed cooled film to produce the collapsed preheated film and/or heating the collapsed cooled film with infrared radiation to produce the collapsed preheated film.

In some embodiments, preheating the cooled film to produce the preheated film comprises blowing the collapsed cooled film to produce tubular cooled film, heating the tubular cooled film with infrared radiation while the tubular cooled film is in tubular form to produce tubular heated film, and collapsing the heated tubular film to produce collapsed preheated film. In such embodiments, the method may comprise further heating the collapsed heated film to produce the preheated film, for example by passing the collapsed heated film through a liquid bath that is warmer than the collapsed heated film to produce the preheated film and/or heating the collapsed heated film with infrared radiation to produce the preheated film.

### BRIEF DESCRIPTION OF THE DRAWINGS

These and other features will become more apparent from the following description in which reference is made to the appended drawings wherein:
FIGURE 1 shows a first exemplary method for producing a biaxially-oriented blown thin polymer film according to an aspect of the present disclosure;
FIGURE 2 shows a second exemplary method for producing a biaxially-oriented blown thin polymer film according to an aspect of the present disclosure; and
FIGURE 3 shows a third exemplary method for producing a biaxially-oriented blown thin polymer film according to an aspect of the present disclosure.

### DETAILED DESCRIPTION

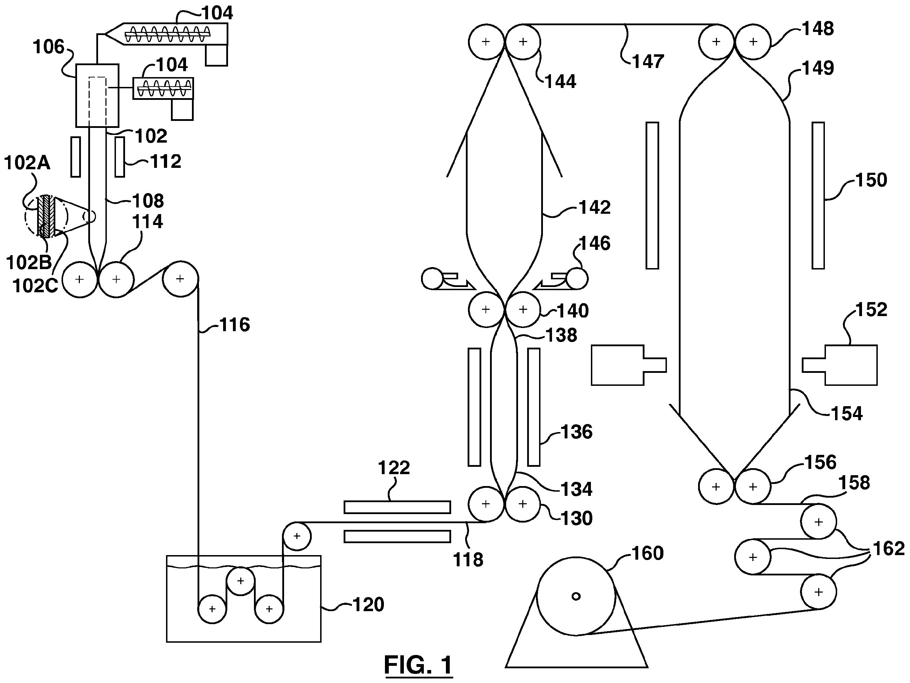

Figures 1, 2 and 3 each illustrate an exemplary method for producing a biaxially-oriented blown thin polymer film according to an aspect of the present disclosure. The term "thin polymer film", as used herein, refers to a polymer film having a thickness between about 15 microns and about 120 microns. The common features of each method will be described with reference to all three Figures, and the differences between the methods will be noted with reference to individual Figures.

Each of the methods comprises co-extruding a tubular film 102 having at least three layers 102A, 102B, 102C. As used in this specification, the term "multi-layer" means at least three layers. As shown in the Figures, extruders 104 extrude the multi-layer film through an annular co-extrusion die 106. The methods each further comprise rapidly cooling the tubular film to produce tubular cooled film 108 using cooling apparatus 112. The cooling apparatus 112 may comprise, for example, an outer and/or inner cooling mandrel or a water ring to provide water cooling or other liquid cooling. The cooling provided by the cooling apparatus 112 reduces crystallinity in the film. After cooling, the tubular cooled film 108 is then collapsed by nip rollers 114 to become collapsed cooled film 116.

After cooling, each of the methods comprises preheating the collapsed cooled film 116 to produce collapsed preheated film 118. The preheating may be carried out in a number of ways.

As shown in Figure 1, in some embodiments preheating the collapsed cooled film 116 to produce the collapsed preheated film 118 comprises passing the collapsed cooled film 116 through a liquid bath 120 (e.g. using water or another suitable liquid) that is warmer than the collapsed cooled film 116 and then heating the collapsed cooled film 116 with infrared radiation using irradiators 122 to thereby produce the collapsed preheated film 118. The liquid bath 120 and/or the irradiators 122 may be used to cross-link the polymer(s) forming the film. For example, the film may contain silanes that react with water in the liquid bath 120, or may contain suitable additives to facilitate cross-linking during exposure to radiation from the irradiators 122. Depending on the material used to form the film, the irradiators 122 may emit ultraviolet radiation to achieve the desired cross-linking. Cross-linking facilitates later (re)blowing of the collapsed preheated film 118. While Figure 1 shows both a liquid bath 120 and irradiators 122, other embodiments may use only a liquid bath or only infrared irradiation.

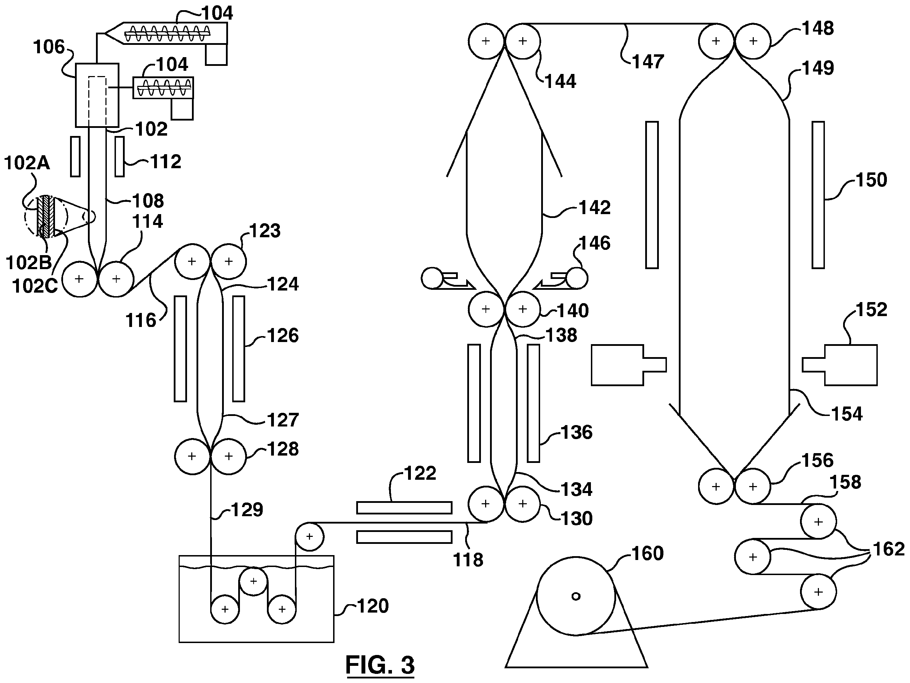

Optionally, as shown in Figure 3, before reaching the liquid bath 120 and irradiators 122, the collapsed cooled film 116 may be passed to nip rollers 123 and then blown to produce tubular cooled film 124, and the tubular cooled film 124 may then be heated with infrared radiation from additional irradiators 126 while the tubular cooled film 124 is in tubular form to produce tubular heated film 127. The tubular heated film 127 is then collapsed by nip rollers 128 to produce collapsed heated film 129, which can then be passed to the liquid bath 120 and irradiators 122 to produce the collapsed preheated film 118. Again, although Figure 3 shows both a liquid bath 120 and irradiators 122, other embodiments may apply only a liquid bath or only infrared irradiation to the collapsed heated film 129.

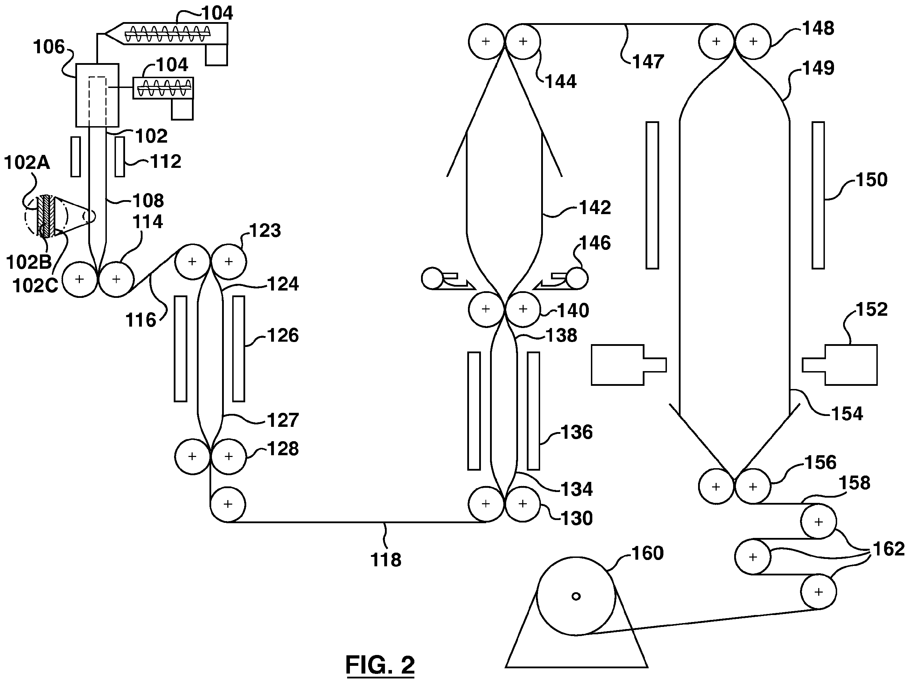

Alternatively, as shown in Figure 2, the preheating consists solely of blowing the collapsed cooled film 116 to produce tubular cooled film 124, heating the tubular cooled film 124 with infrared radiation from irradiators 126 while the tubular cooled film 124 is in tubular form to produce tubular heated film 127, and then collapsing the tubular heated film 127 to produce the collapsed preheated film 118.

In each case, the collapsed preheated film 118 proceeds to nip rollers 130. Optionally, coatings or other treatments, for example UV irradiation, can be applied to the collapsed preheated film 118 before it proceeds to the nip rollers 130.

In each of the methods shown in Figures 1 to 3, the collapsed preheated film 118 is blown to produce tubular preheated film 134, and the tubular preheated film 134 is further heated by heater(s) 136 from outside of the tubular preheated film 134 to produce further heated tubular film 138. The heater(s) 136 may be, for example, hot air heaters or infrared heaters whose wavelength is targeted to the polymer materials used in the film. The heating of the tubular preheated film 134 by the heater(s) 136 is carried out very rapidly, and creates a decreasing temperature gradient from the outside surface of the further heated tubular film 138 to the inside surface of the further heated tubular film 138; that is, the outside surface of the further heated tubular film 138 is hotter than the inside surface of the further heated tubular film 138 and the inside surface of the further heated tubular film 138 is hot enough for re-blowing, but sufficiently cool to avoid blocking of the inside surface when the further heated tubular film 138 is collapsed by the nip rollers 140. The temperatures and temperature gradients for the further heated tubular film 138 will depend on the materials used in the various layers of the multi-layer polymer film, and the temperature/intensity of the heater(s) 136 will in turn depend on the required temperature and temperature gradient. Selection of suitable temperature parameters is within the capability of one skilled in the art, now informed by the present disclosure. Typically, the gradient will be at least three degrees Celsius (3° C), preferably at least five degrees Celsius (5° C) and still more preferably at least ten degrees Celsius (10° C). The blowing of the tubular preheated film 134/further heated tubular film 138 between the nip rollers 130 and the nip rollers 140 also allows the diameter of the tubular preheated film 134/further heated tubular film 138 to be adjusted.

Next, in each of the methods shown in Figures 1 to 3, the further heated tubular film 138 is collapsed by nip rollers 140 and then blown and cooled to biaxially orient the further heated tubular film 138 and produce biaxially-oriented tubular film 142, which is then collapsed by nip rollers 144 to form collapsed biaxially-oriented tubular film 147. In the illustrated embodiment, the cooling is carried out by an air ring 146. The biaxially-oriented tubular film 142 is oriented in both the machine direction (MD) and the transverse direction (TD). As part of the orientation process, the film can be stretched to change the diameter of the further heated tubular film 138/biaxially-oriented tubular film 142 and alter its physical properties.

In each of the methods shown in Figures 1 to 3, the collapsed biaxially-oriented tubular film 147 passes from the nip rollers 144 to nip rollers 148, and the biaxially-oriented tubular film 147 is then blown to produce re-blown biaxially-oriented tubular film 149, heated by heater(s) 150 and then cooled by an air ring 152 to relieve stress within the collapsed re-blown biaxially-oriented tubular film 149. This process fixes the shrink properties of the film so as to produce ship-stable biaxially-oriented tubular film 154, and generally does not significantly alter the diameter of the film, i.e. does not increase or decrease the diameter of the film by more than a few centimeters. The term "ship-stable", as used herein, refers to film which does not undergo shrinking at temperatures below sixty degrees Celsius (60° C). Depending on the temperature to which the re-blown biaxially-oriented tubular film 149 is heated, the desired shrink properties can be imparted; selection of appropriate temperatures to achieve desired shrink properties is within the capability of one skilled in the art, now informed by the present disclosure. The heater(s) 150 may be, for example, hot air heaters or infrared heaters.

The ship-stable biaxially-oriented tubular film 154 is then collapsed by nip rollers 156 to form collapsed ship-stable biaxially-oriented tubular film 158, which is then fed to a winder 160. Optionally, the collapsed ship-stable biaxially-oriented tubular film 158 may be further cooled, for example by chill rollers 162 or blown air, before being passed to the winder 160. Also optionally, the collapsed ship-stable biaxially-oriented tubular film 158 may by slit and unfolded before being passed to the winder 160.

As can be seen from the drawings, each of the exemplary methods includes at least four "bubbles" of film in tubular form: a first bubble between the annular co-extrusion die 106 and the nip rollers 114, a second bubble between the nip rollers 130 and the nip rollers 140, a third bubble between the nip rollers 140 and the nip rollers 144 and a fourth bubble between the nip rollers 148 and the nip rollers 156. Some embodiments may include one or more additional bubbles; for example the methods shown in Figures 2 and 3 include an additional bubble between nip rollers 123 and nip rollers 128. It will be appreciated that the terms "first", "second", "third" and "fourth" refer to a relative order of those particular bubbles, and do not preclude interposition of additional bubbles (e.g. the bubble between nip rollers 123 and nip rollers 128).

Because the diameter of the film can be adjusted between the nip rollers 130 and the nip rollers 140 and again between the nip rollers 140 and the nip rollers 144, the methods of the present disclosure allow for increased flexibility in adjusting the diameter of the blown film without having to change the sizing calibrator (e.g. inner mandrel or vacuum sizer) used for the initially extruded tubular film 102. For example, if the initially extruded tubular film 102 has a diameter of 100 mm, depending on the material it could only be re-blown to approximately 300 mm in diameter in a single step; and larger diameters would require stopping the line to change the size calibrator. By using the two stage process, that is, a first bubble between the nip rollers 130 and the nip rollers 140 and a second bubble between the nip rollers 140 and the nip rollers 144, the diameter of the film can be increased to approximately 400 mm without stopping the line to change the size calibrator.

Additionally, the use of at least four bubbles also allows the film to be exposed to moisture (e.g. in the liquid bath 120) after the first bubble, with the next bubble being used to provide heating and drying to remove moisture and obviate curling before expanding the film in the third bubble. Thus, in certain preferred embodiments at least two bubbles (the initial bubble after extrusion and a subsequent downstream bubble) are used to treat the film before expanding it.

By way of example, and without limitation, the method shown in Figure 1 may be applied to a seven-layer film having nylon as the exterior layer. During passage through the liquid bath 120, the nylon layer could absorb water, which helps to obviate curling. The film is heated in the second bubble, between the nip rollers 130 and the nip rollers 140, to the nylon orientation temperature, which allows the film (including the nylon exterior layer) to be oriented from about 10 percent to about 50% above the initial diameter, which may be determined by the die lip and vacuum sizer of the annular co-extrusion die 106, and then further stretched in the third bubble, between the nip rollers 140 and the nip rollers 144, to achieve a diameter of about 500 mm before being fed to the fourth bubble between the nip rollers 148 and the nip rollers 156. As noted above, in the fourth bubble the shrink properties are controlled without affecting the diameter of the tube. Additionally, because the film can be crosslinked in the liquid bath 120 and/or irradiators 122, the thickness of the final film can be reduced.

Certain exemplary embodiments have been described by way of example. It will be apparent to persons skilled in the art that a number of variations and modifications can be made without departing from the scope of the claims.

## Claims

1. A method for producing a biaxially-oriented blown film, the method comprising:
co-extruding a tubular film having at least three layers;
cooling the tubular film to produce tubular cooled film;
collapsing the tubular cooled film to produce collapsed cooled film;
preheating the collapsed cooled film to produce collapsed preheated film;
blowing the collapsed preheated film to produce tubular preheated film;
further heating the tubular preheated film from outside of the tubular preheated film to produce further heated tubular film having a decreasing temperature gradient from an outside surface of the further heated tubular film to an inside surface of the further heated tubular film whereby the outside surface of the further heated tubular film is hotter than the inside surface of the further heated tubular film and the inside surface of the further heated tubular film is hot enough for re-blowing but sufficiently cool to avoid blocking;
collapsing, blowing and cooling the further heated tubular film to biaxially orient the further heated tubular film and produce biaxially-oriented tubular film; and
collapsing, blowing, heating and then cooling the biaxially-oriented tubular film to relieve stress within the biaxially-oriented tubular film to produce ship-stable biaxially-oriented tubular film.

2. The method of claim 1, wherein preheating the cooled film to produce the preheated film comprises heating the collapsed cooled film to produce the collapsed preheated film.

3. The method of claim 2, wherein heating the collapsed cooled film comprises passing the collapsed cooled film through a liquid bath that is warmer than the collapsed cooled film to produce the collapsed preheated film.

4. The method of claim 2, wherein heating the collapsed cooled film comprises heating the collapsed cooled film with infrared radiation to produce the collapsed preheated film.

5. The method of claim 2, wherein heating the collapsed cooled film comprises:
passing the collapsed cooled film through a liquid bath that is warmer than the collapsed cooled film; and
heating the collapsed cooled film with infrared radiation;
to thereby produce the collapsed preheated film.

6. The method of claim 1, wherein preheating the cooled film to produce the preheated film comprises:
blowing the collapsed cooled film to produce tubular cooled film;
heating the tubular cooled film with infrared radiation while the tubular cooled film is in tubular form to produce tubular heated film;
collapsing the heated tubular film to produce collapsed preheated film.

7. The method of claim 1, wherein preheating the cooled film to produce the preheated film comprises:
blowing the collapsed cooled film to produce tubular cooled film;
heating the tubular cooled film with infrared radiation while the tubular cooled film is in tubular form to produce tubular heated film;
collapsing the tubular heated film to produce collapsed heated film; and
further heating the collapsed heated film to produce the preheated film.

8. The method of claim 7, wherein further heating the collapsed heated film comprises passing the collapsed heated film through a liquid bath that is warmer than the collapsed heated film to produce the preheated film.

9. The method of claim 7, wherein further heating the collapsed heated film comprises heating the collapsed heated film with infrared radiation to produce the preheated film.

10. The method of claim 7, wherein further heating the collapsed heated film comprises:
passing the collapsed heated film through a liquid bath that is warmer than the collapsed heated film; and
heating the collapsed heated film with infrared radiation;
to thereby produce the preheated film.
